# EUROPEAN PATENT APPLICATION

(11) **EP 1 729 513 A2**
(43) Date of publication of application: **06.12.2006**
(21) Application number: 06252640.5
(22) Date of filing: 19.05.2006
(51) Int. Cl.: H04N 5/445

(54) **Multi function electronic device with user guidance**

(30) Priority: 31.05.2005 JP 2005160316
(71) Applicant: ORION ELECTRIC CO., Ltd., Fukui 915-8555 (JP)
(72) Inventor: Nishitani, Kimio Orion Electric Co. Ltd., Fukui 915-8555 (JP)
(74) Representative: Paget, Hugh Charles Edward

(57) **Abstract**

In a prior art composite device, it was possible to start DVD reproduction during a DVD mode, but in order to perform operation in other modes (VCR or HDD reproduction etc.), it was necessary to confirm the current mode, press a "mode switch key" to switch the mode to VCR mode or HDD mode, and press the "play key" to start reproduction of the VCR or the HDD. In a composite electronic device 1 having integrally assembled thereto a plurality of apparatus units 21 and 28 for respectively recording or reproducing data on multiple recording media, the composite electronic device 1 has a mode switching unit for selecting the apparatus unit 21 or 28, and multiple operation keys 5 including multipurpose keys used commonly for operating the multiple apparatus units 21 and 28, wherein the device is arranged so as to display an operation guidance of the mode switch unit when one of the multipurpose keys is pressed.

## Description

### BACKGROUND OF THE INVENTION

### Field of the Invention

The present invention relates to a composite electronic device having combined and integrally assembled thereto a plurality of specific AV (audio visual) apparatus units such as an HDD (hard disk drive) apparatus unit, a DVD (digital versatile disk) apparatus unit, a VCR (video cassette recorder) apparatus unit and a memory card apparatus unit, and more specifically, relates to a composite electronic device with an operation object guidance function enabling the user to easily record/reproduce/stop the desired specific recording medium.

### Description of the Related Art

In recent years, upon operating composite electronic devices having integrally assembled thereto a plurality of AV apparatus units such as a DVD apparatus unit, a VCR apparatus unit and an HDD apparatus unit, or having the plurality of AV apparatus units integrally assembled to a TV, operations such as recording, reproducing and stopping of the composite electronic devices are performed by pressing operation keys on a remote controller for remote-controlling the composite electronic device, wherein the composite electronic devices are provided with a "mode switch key" for selecting which apparatus unit to be used for recording operations and the like. However, since it is difficult for the user to recognize which mode, such as among the DVD mode, the VCR mode and the HDD mode, is selected by the mode switch key, there is a drawback in that the user must perform a bothersome operation of confirming the currently selected mode and switching to the desired specific mode each time the user wishes to perform recording or the like by designating the mode.

Japanese Patent Application Laid-Open Publication No. 2005-51310 (Patent document 1) provides an electronic device capable of preventing erroneous operation of the user by notifying the user when a key of a remote control transmitter used in a mode other than the set mode is operated.

In the above-mentioned composite electronic device, when the user operates a key to perform recording/reproducing/stopping, and if the change of operation from the current mode to another mode is not possible according to the recording status or the like, that is, when the user wishes to perform stop operation of the DVD apparatus unit, if the DVD mode is already selected and the current DVD mode status is maintained, in other words, when the current mode is the DVD mode but a DVD disk is not loaded in the DVD apparatus unit, or the recording operation of the DVD apparatus unit has already ended, or the operation is already at a stopped status based on a stop instruction, the stop operation in the DVD mode cannot be performed, so in order to switch the current mode to another mode such as the VCR mode, the user must confirm that the current mode is the DVD mode based for example on symbols indicating a DVD disk and a video cassette or characters such as DVD, VCR or the like displayed on a display tube disposed on the front side of the device, before pressing the "mode switch key" to switch the mode to the VCR mode or the like. In the present description, the term "recording/reproducing" includes both "recording and reproducing" and "recording or reproducing".

Further in recent years, when the VCR apparatus unit or the HDD apparatus unit and the like is reproducing and the DVD apparatus unit is stopped but the DVD mode is selected, in order to stop reproduction of the VCR apparatus unit or the HDD apparatus unit, the user must confirm the current mode in the manner described above, press the "mode switch key" to switch the mode to the target apparatus unit mode (VCR mode or HDD mode) , and then press the "stop key" in order to stop the reproducing operation of the VCR or the HDD. Moreover, when change of operation is possible in a plurality of modes, such as when the current mode is the DVD mode and the DVD apparatus unit, the VCR apparatus unit and the HDD apparatus unit are all stopped, the reproducing operation is possible in all modes, so in order to start DVD reproduction, the user should simply press the "play key", but in order to start operation in a different mode (such as reproduction of the VCR or the HDD), the user must first confirm the current mode in the manner descried earlier, press the "mode switch key" to switch the mode to the VCR mode or the HDD mode, and then to press the "play key" to start reproduction of the VCR or the HDD, so that the user must always confirm which mode is currently selected before performing complex key operation as described above. Moreover, if the user wishes to record data on the HDD apparatus unit but the currently set mode is set to the DVD mode, the data may be recorded on the DVD through erroneous operation of the user.

Further according to the prior art disclosed in patent document 1, when a remote controller signal based on a key operation for a mode different from the set mode in the remote controller is transmitted, a message is displayed notifying that the key operation is effective in a different mode. For example, if the DVD mode is selected but the key for operating the VCR apparatus is operated, the following message is displayed; "The remote controller is set to DVD mode. If you wish to operate the TV/VCR, please change the mode on the remote controller", or the following message is displayed; "The operation is ineffective", but since there is a large number of characters to be displayed, the composite electronic device having the DVD apparatus unit and the VCR apparatus unit integrally assembled to a body separate from a TV or the like must have large indicators such as LEDs for displaying the selected mode. Furthermore, according to the prior art, the user had to perform complex key operation including pressing of the "mode switch key" according to a guidance display and the like.

### SUMMARY OF THE INVENTION

The present invention aims at solving the problems mentioned above by providing a composite electronic device with an operation object guidance function capable of displaying for guidance the current mode and mode selections when the user instructs recording/reproducing/stopping operations to a specific desirable AV apparatus unit simply by operating the record key/ play key/ stop key, and further displaying the operation guidance of the recording/reproducing/stopping operations respectively, and displaying the above guidance in a simple manner so that it can be displayed on the limited space on the display tube provided on the body of the device.

The composite electronic device with an operation object guidance function according to the present invention characterizes in providing a composite device having integrally assembled thereto a plurality of apparatus units for respectively recording and reproducing data on a plurality of recording media, the composite electronic device comprising: a mode switch unit for selecting an apparatus unit; a plurality of operation keys including a multipurpose key used commonly for operating the plurality of apparatus units; wherein when the multipurpose key is pressed, the device displays an operation guidance of the mode switch unit.

The composite electronic device with an operation object guidance function according to the present invention further characterizes in providing a composite electronic device having integrally assembled thereto a plurality of apparatus units for respectively recording and reproducing data on a plurality of recording media, the composite electronic device comprising: a plurality of operation keys including a multipurpose key used commonly for operating the plurality of apparatus units; a transmission unit for transmitting an instruction signal for instructing a code corresponding to respective operation keys when the operation key is pressed; an input unit for receiving the instruction signal; wherein the composite electronic device decodes a selected mode based on the instruction signal received via the input unit, decodes based on the code of the instruction signal whether the instruction signal is provided via the operation key or the multifunction key, and if the operation is provided via the multipurpose key, displays a mode operation guidance of the apparatus unit being the object of operation.

Furthermore, the composite electronic device with an operation object guidance function of the present invention further characterizes in that when the multipurpose key is pressed, the device determines whether the key is effective in a plurality of modes, and if the key is effective only in a single mode and the key is effective in the current mode, the operation guidance of the mode switch unit is not displayed, but if the key is effective in a plurality of modes or if the key is effective only in a single mode which is difference from the current mode, the operation guidance of the mode switch unit is displayed.

Moreover, the composite electronic device with an operation object guidance function of the present invention further characterizes in that the operation guidance of the mode switch unit is a screen display for selecting the apparatus unit being the object of operation, and after the mode is switched based on the selection of the apparatus unit, the device performs control based on the operation of the operation key.

Further, the composite electronic device with an operation object guidance function of the present invention characterizes in that when the code being decoded based on the instruction signal corresponds to the multipurpose key, the device determines whether the key is effective in the current mode, and if the key is effective in the current mode, the device performs control based on the operation of the operation key, but if the key is not effective in the current mode, the device displays a mode operation guidance of the apparatus unit being the object of operation.

Moreover, the composite electronic device with an operation object guidance function of the present invention further characterizes in that when the operation key corresponding to the code being decoded based on the instruction signal is not an effective key in the current mode, the device displays a screen for selecting the apparatus unit being the object of operation, and after switching the mode according to the selection of the apparatus unit, performs control based on the operation of the operation key.

The composite electronic device with an operation object guidance function according to the present invention characterizes in providing a composite electronic device having integrally assembled thereto a plurality of apparatus units for respectively recording and reproducing data on a plurality of recording media, the composite electronic device comprising: a plurality of operation keys including a multipurpose key used commonly for operating the plurality of apparatus units; an input unit for receiving an instruction signal from a remote controller capable of switching modes among a plurality of modes in which the apparatus unit being the object of operation is specified, for transmitting the instruction signal having a code corresponding to the plurality of operation keys and remote-controlling the composite electronic device; wherein the composite electronic device decodes the mode being selected by the remote controller based on the instruction signal received through the input unit, decodes based on the code which operation key had been operated to output the instruction signal, controls based on the decoded result the plurality of apparatus units and the overall composite electronic device, performs control so that the multipurpose key functions as the operation key for respective apparatus units in conjunction with the respective mode being selected, stores the decoded mode of the remote controller, and displays on the display unit the operation guidance for selecting respective modes being the object of operation when the multifunction key is operated.

### BRIEF DESCRIPTION OF THE DRAWINGS

FIG. 1 is a front view of a composite electronic device with a VCR apparatus unit and a DVD apparatus unit according to a preferred embodiment of the present invention.
FIG. 2 is a plan view of a remote controller for remote-controlling the composite electronic device according to the preferred embodiment of the present invention.
FIG. 3 is a block diagram showing the structure of the composite electronic device according to the preferred embodiment of the present invention.
FIG. 4 is a flowchart showing the control procedure of the composite electronic device according to the preferred embodiment of the present invention.
FIG. 5 is a comparative explanatory view comparing the prior art and the present invention of transition from reproducing operation to stop operation of the composite electronic device according to the preferred embodiment of the present invention.
FIG. 6 is a comparative explanatory view comparing the prior art and the present invention of transition from stop operation to reproducing operation of the composite electronic device according to the preferred embodiment of the present invention.
FIG. 7 is an explanatory view showing one example of a monitor screen for selecting the reproduction object by the VCR apparatus unit or the DVD apparatus unit of the composite electronic device according to the preferred embodiment of the present invention.
FIG. 8 is an explanatory view showing one example of the monitor screen for selecting the reproduction object by the VCR apparatus unit or the DVD apparatus unit of the composite electronic device according to the preferred embodiment of the present invention.
FIG. 9 is an explanatory view showing one example of the monitor screen for selecting the reproduction object by the VCR apparatus unit or the DVD apparatus unit of the composite electronic device according to the preferred embodiment of the present invention.
FIG. 10 is an explanatory view showing the monitor screen of the composite electronic device capable of mounting an HDD apparatus unit and a memory card in addition to the VCR apparatus unit and the DVD apparatus unit of the composite electronic device according to the preferred embodiment of the present invention.

### DETAILED DESCRIPTION OF THE PREFERRED EMBODIMENTS

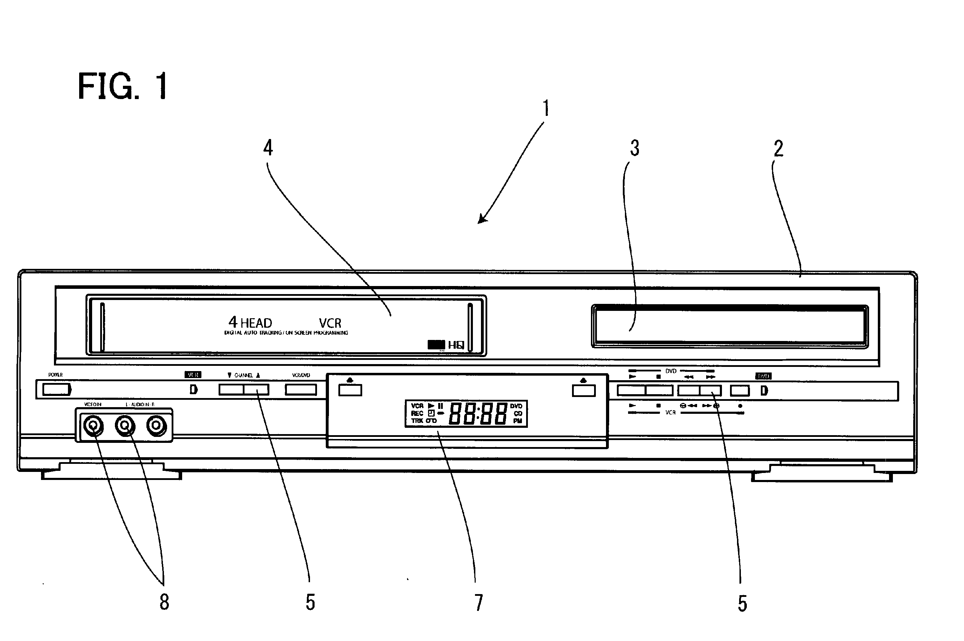

Now, the preferred embodiments for carrying out the present invention will be described in detail with reference to FIGS. 1 through 10. Needless to say, the present invention can be easily applied to arrangements other than those described in the present embodiments within the scope of the invention.

The present invention relates to a composite electronic device with multiple AV apparatus units having specific AV apparatus units such as an HDD apparatus unit, a DVD apparatus unit and a VCR apparatus unit assembled integrally therein, and as an actual example of the present invention, a composite device having a DVD apparatus unit and a VCR apparatus unit integrally assembled thereto is described, which is designed so as to display a mode selection guidance display for selecting the specific apparatus units through operation of the record/play/stop keys on a remote controller. However, the present invention is not restricted to the composite electronic device having a DVD apparatus unit and a VCR apparatus unit assembled thereto, and can be applied to composite electronic devices having an HDD apparatus unit or various apparatus units for other media.

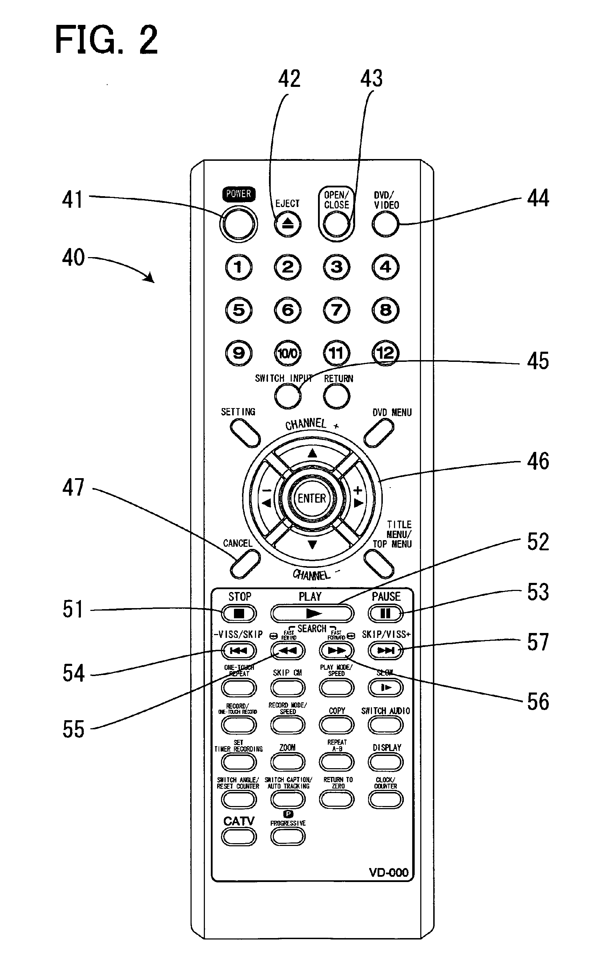

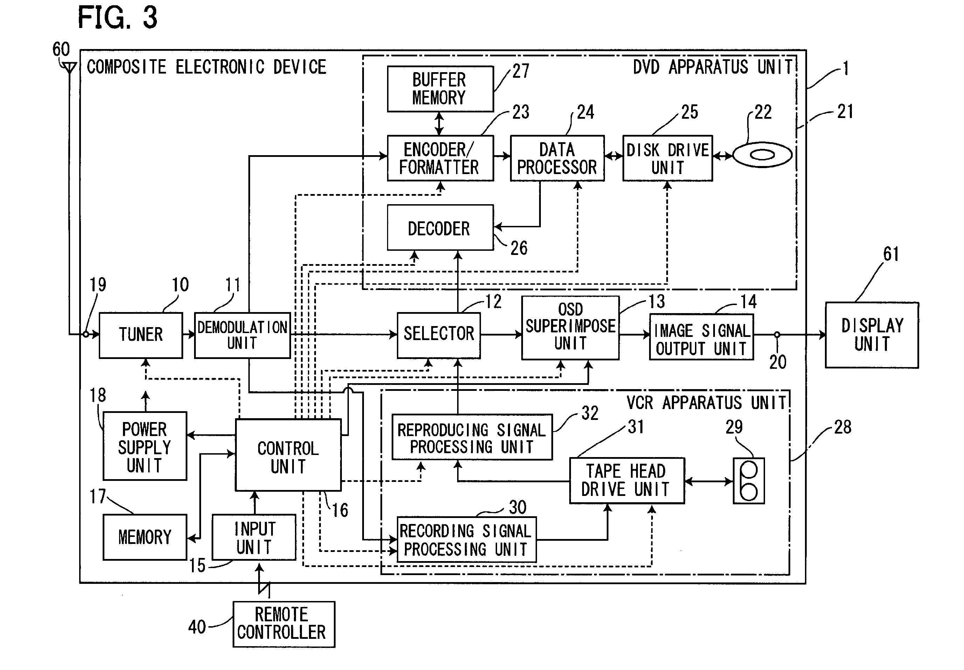

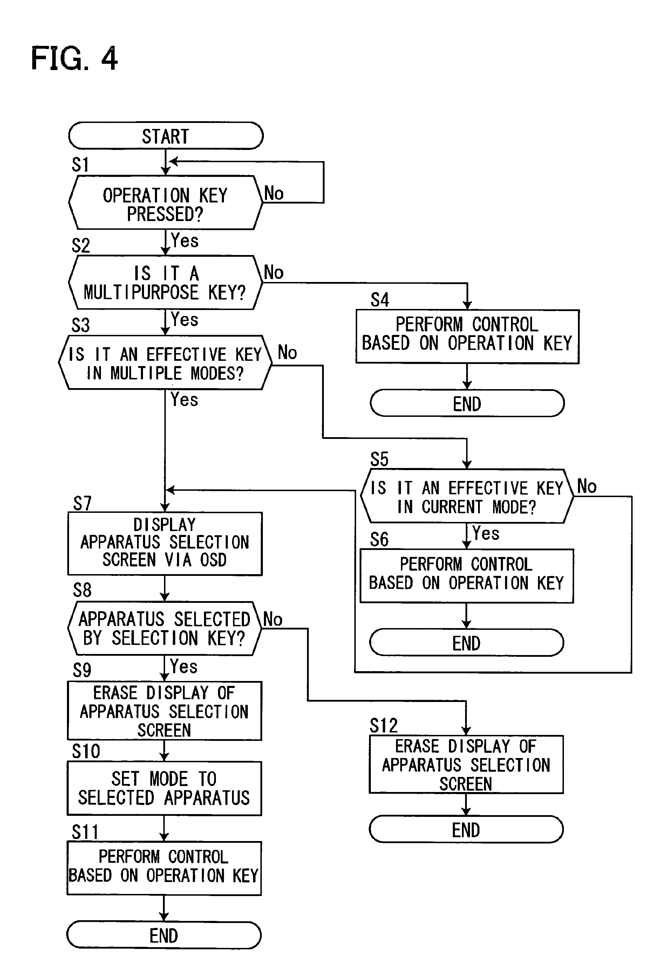

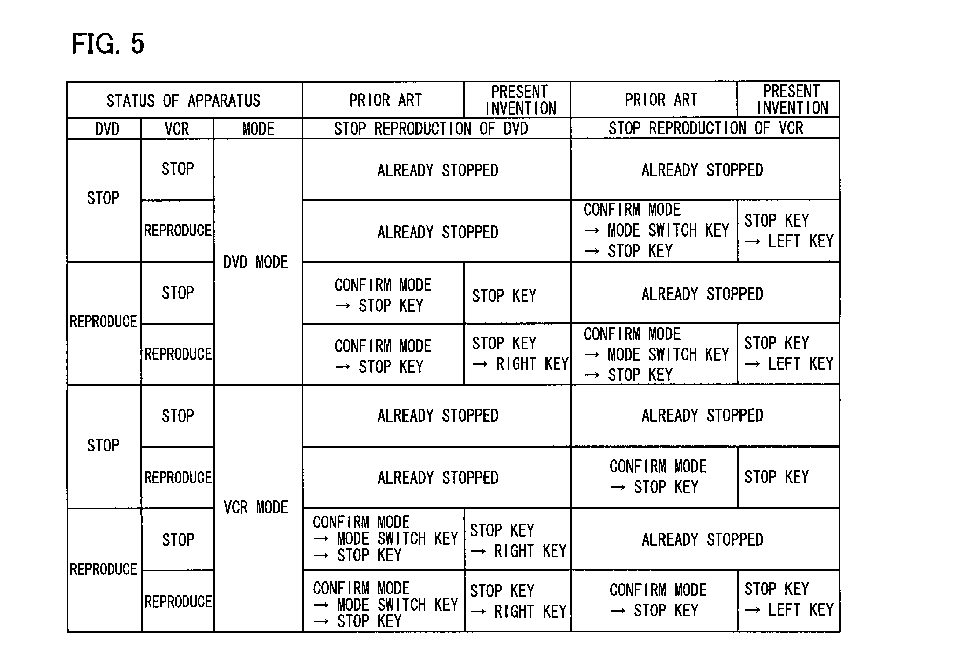

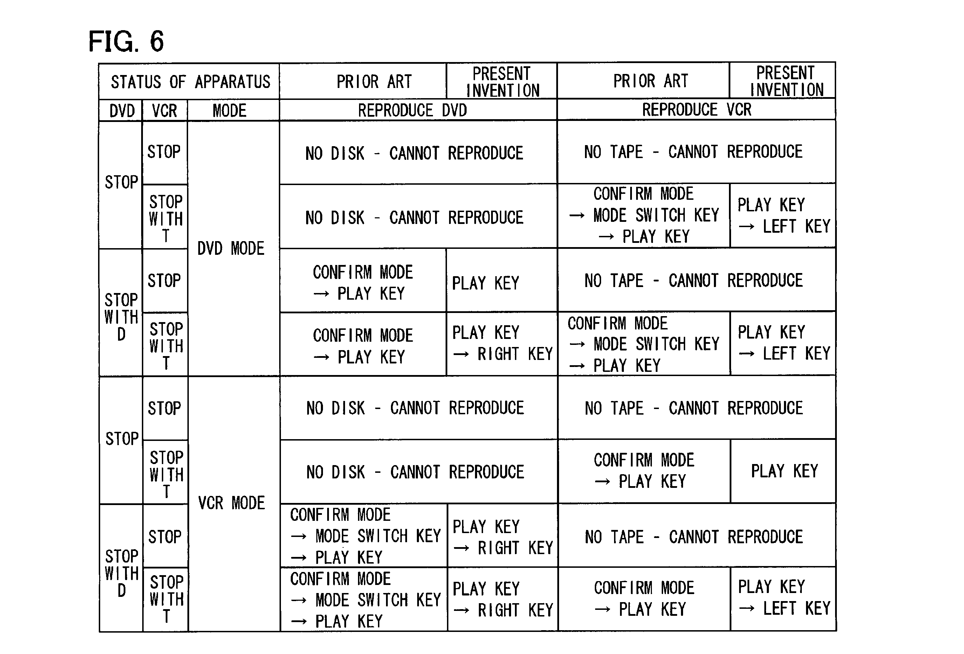

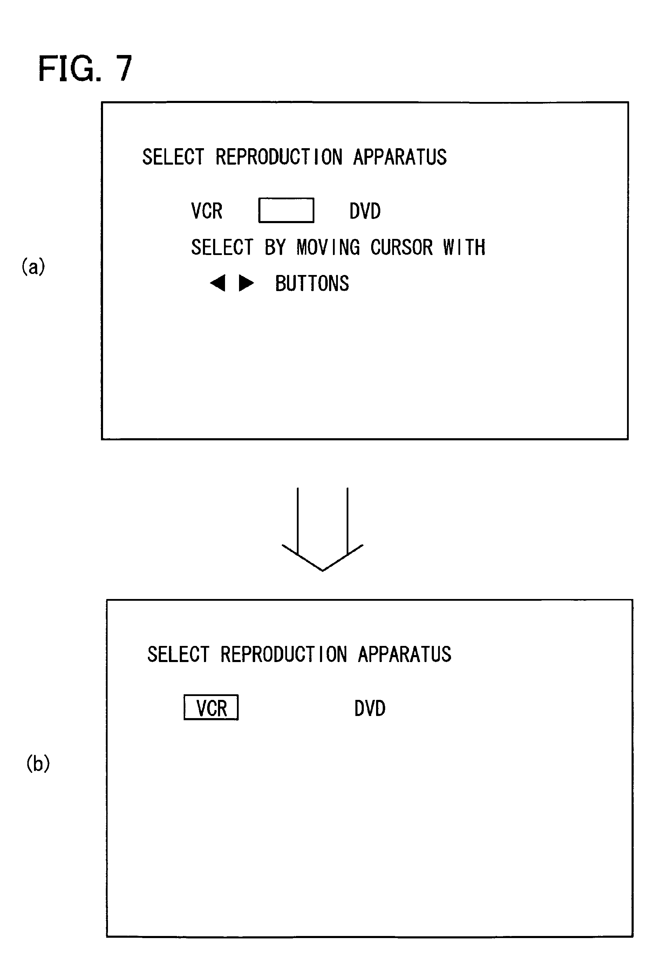

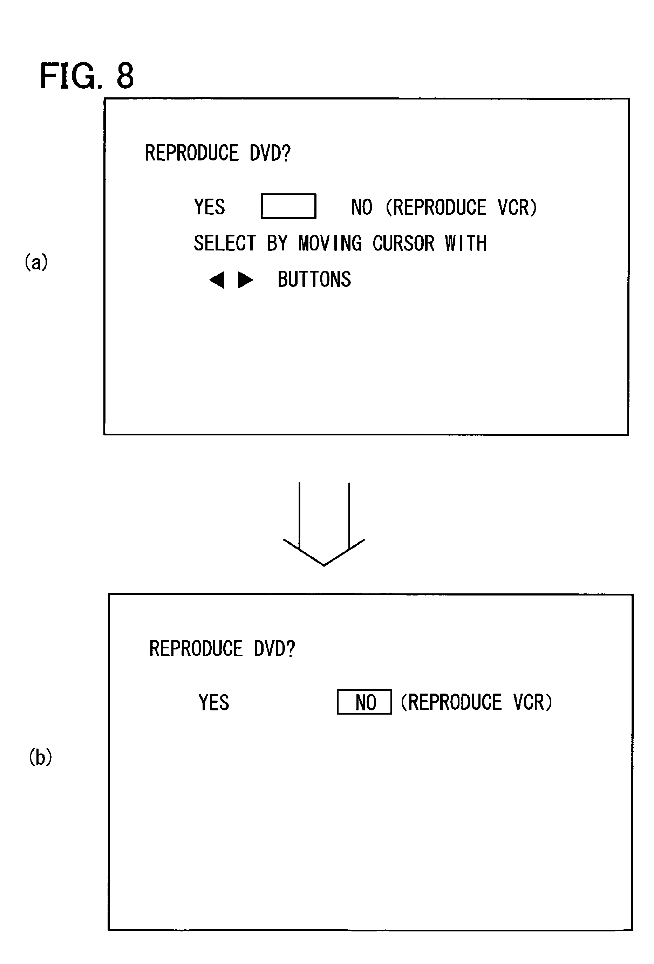

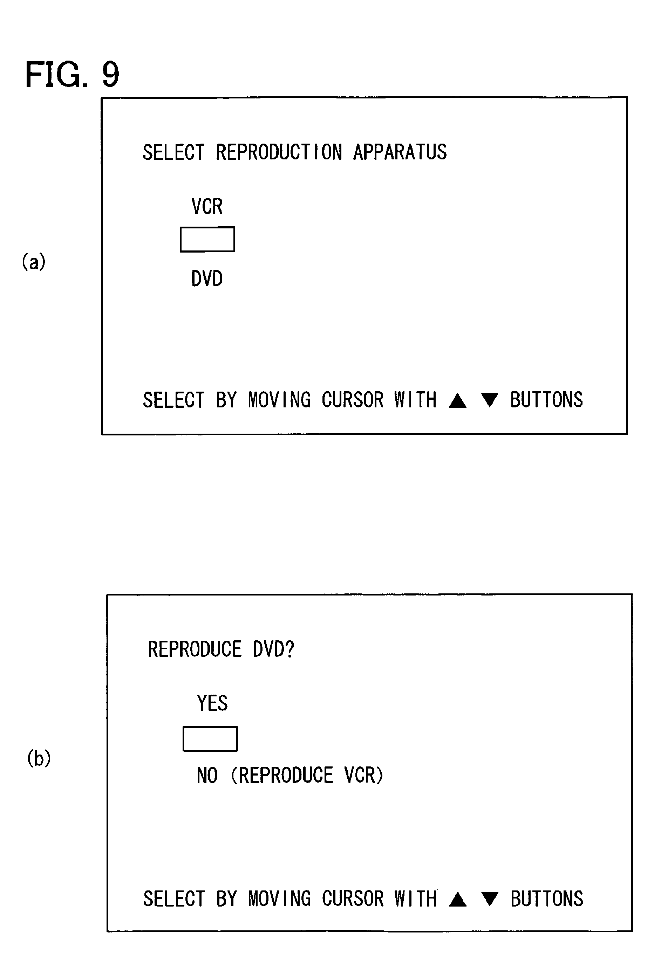

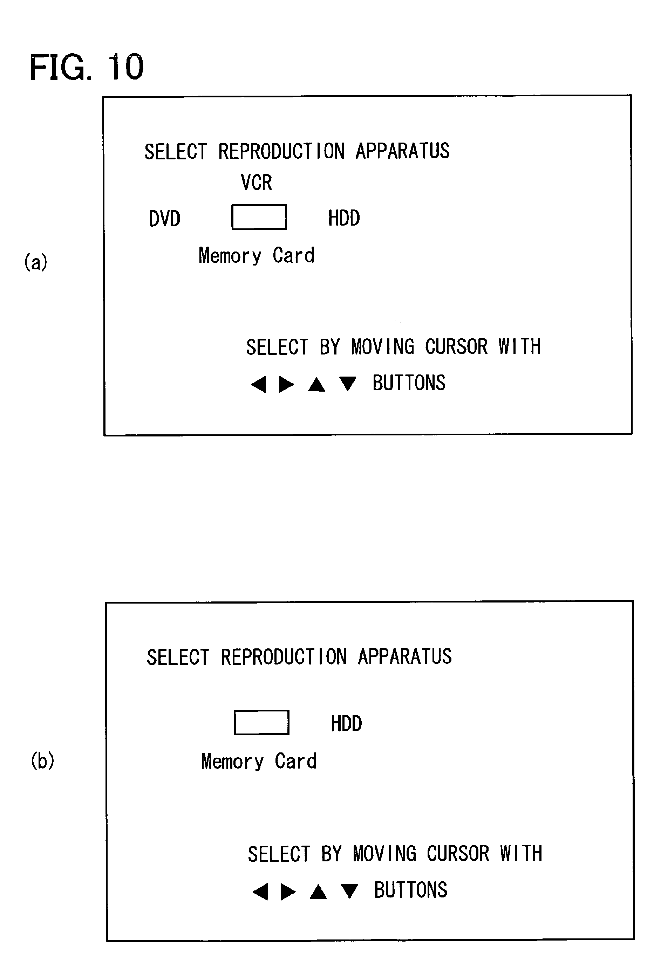

FIG. 1 is a front view of the composite electronic device having a VCR apparatus unit and a DVD apparatus unit, FIG. 2 is a plan view of a remote controller for remote-controlling the composite electronic device, FIG. 3 is a block diagram illustrating the configuration of the composite electronic device, FIG. 4 is a flowchart showing the steps for displaying guidance for selecting the VCR apparatus unit or the DVD apparatus unit or the like as the operation object of the composite electronic device through operation of the remote controller or the like, FIG. 5 is a comparative explanatory view of the prior art and the present invention showing the example of transition from reproducing operation to stopping operation of the apparatuses of the composite electronic device, FIG. 6 is a comparative explanatory view of the prior art and the present invention showing the example of transition from stopping operation to reproducing operation of the apparatuses of the composite electronic device, FIG. 7 is an explanatory view showing one example of the monitor screen for selecting the reproducing object of the VCR apparatus unit or the DVD apparatus unit, FIG. 8 is an explanatory view showing one example of the monitor screen for selecting the reproducing object of the VCR apparatus unit or the DVD apparatus unit, FIG. 9 is an explanatory view showing one example of the monitor screen for selecting the reproducing object of the VCR apparatus unit or the DVD apparatus unit, and FIG. 10 is an explanatory view showing the monitor screen of a composite electronic device capable of having an HDD apparatus unit and a memory card mounted thereto in addition to the VCR apparatus unit and the DVD apparatus unit.

With reference to FIG. 1, a composite electronic device having a VCR apparatus unit and a DVD apparatus unit integrally assembled thereto will be described. Reference number 1 illustrated in FIG. 1 is a composite electronic device having a box-shaped exterior and that can be divided into front and rear portions, and this composite electronic device 1 has a DVD apparatus unit built into the left side within a cabinet 2 of the device 1 and a retractable tray or the like for loading a DVD disk disposed in a disk loading portion 3. On the other hand, a VCR apparatus unit is built into the right side of the cabinet 2, with a cassette inserting portion 4 for inserting a video cassette disposed on the front side of the composite electronic device 1. Further, operation keys 5 for instructing operations of, or operating, the composite electronic device 1 is disposed therebelow.

At the center of the front side of the cabinet 2 is disposed a display tube 7 for displaying clocks, counters and the like via a photoelectric tube, on the right side thereof is an indicator not shown for displaying modes, such as a DVD mode and a VCR mode, by lighting LEDs, and on the front right side of the cabinet 2 is disposed a terminal unit 8 enabling connection with other electronic devices.

Next, a remote controller for remote-controlling the composite electronic device will be described with reference to FIG. 2. The remote controller 40 illustrated in FIG. 2 has on its upper left area a power key 41 capable of turning the power of the composite electronic device 1 on and off from a remote location, and on the right side thereof are provided an eject key 42 for ejecting a video cassette from the cassette inserting portion 4, an open/close key 43 for opening and closing the disk loading portion 3, and a mode switch key 44 for switching modes between a DVD mode and a VCR mode. Moreover, the remote controller further has on substantially the center area thereof an input switch key 45 for switching input of reproducing image between the DVD apparatus unit and the VCR apparatus unit, and on the area below are disposed select keys 46 disposed on the upper, lower, left and right sides of an enter key 48. Further below the above-mentioned keys of the remote controller is a cancel key 47 for canceling the contents instructed through key operation, and further below are a stop key 51 for stopping recording or reproducing operation, a reproducing key 52 for instructing reproducing operation and a pause key 53 for instructing pause, which are arranged in the lateral direction. Further below the above-mentioned keys are arranged a skip key 54, a fast rewind key 55, a fast forward key 56 and a skip key 57. On the lower left of the above-mentioned keys are disposed a record key 58 and a timer record key 59.

Next, we will describe circuit blocks constituting the composite electronic device 1 with reference to FIG. 3. Reference number 1 shown in FIG. 3 is a composite electronic device having a VCR apparatus unit 28 and a DVD apparatus unit 21 assembled integrally thereto, as described earlier, and in FIG. 3, the DVD apparatus unit 21 and the VCR apparatus unit 28 are shown surrounded with alternate long and short dashed lines. The flow of video audio signals is illustrated by arrowed solid lines, and the flow of control signals is illustrated by arrowed dashed lines. The composite electronic device 1 has a power supply unit 18 for supplying power to operate units including the DVD apparatus unit 21 and the VCR apparatus unit 28, supplying power to the whole device 1.

Moreover, an input unit 15 for receiving control signals transmitted as instruction signals from the remote controller 40 operating the device 1 via operations instructed by the user is disposed, and based on the operation signals received via the input unit 15, a control unit 16 controls to turn the power of the device 1 on and off. In another operation, the control unit performs control to select channels of broadcast programs. In another operation, the control unit 16 controls the whole device 1 to perform recording/reproducing/stopping operation by controlling the operation of the DVD apparatus unit 21 and the VCR apparatus unit 28. The control unit 16 is composed for example of a CPU (central processing unit), having a storage region for storing various system control software, GUI (graphical user interface) software, processing program codes and the like for performing each control. Further, the control unit 16 is connected to a memory unit 17 composed for example of a rewritable nonvolatile memory for storing channel select information, timer recording data and the like, which also store data of characters and symbols provided to an OSD (on-screen display) superimpose unit 13 described later.

The composite electronic device 1 comprises an antenna input terminal 19 through which are input broadcast signals of multiple television program broadcasts received through an antenna 60, and a tuner unit 10 connected to the terminal 19 selects the desired one of the multiple broadcast signals based on the channel selection signal received from the control unit 16. The selected broadcast signals are supplied to a demodulation unit 11 where the video signals and audio signals are demodulated and converted into base band video signals and audio signals, respectively. In the following description, the processing of audio signals is omitted and the processing of video signals is mainly described for sake of better understanding.

Next, the video signals converted in the demodulation unit 11 are supplied to the OSD superimpose unit 13 via a selector unit 12 for selecting in alternative manner one signal among received broadcast signals, reproduction signals of the DVD apparatus unit 21 described later and reproduction signals of the VCR apparatus unit 28 described later. The OSD superimpose unit 13 either directly outputs the broadcast signals or reproduction signals selected in alternative manner by the selector unit 12 based on the controls of the control unit 16 to a video signal output unit 14, or superimposes on the signals selected by the selector unit 12 a guidance display related to modes such as the DVD mode and VCR mode or information such as mode select menu and operation menu displayed through operation of the remote controller 40 mentioned later and outputs the same. The superimposed display and information are generated in the control unit 16 using data stored in the memory unit 17. The video signals output from the OSD superimpose unit 13 is processed in the video signal output unit 14 so as to be displayed on a display unit 61, and displayed on the display unit as image. The composite electronic device 1 does not have a built-in display unit 61 such as a cathode-ray tube or a liquid crystal display panel, so the video signals output from the video signal output unit 14 is displayed on a display unit 61 provided separately from the composite electronic device 1 and connected thereto via a video signal output terminal 20. The display unit 61 can be disposed inside the composite electronic device 1 or can be disposed on the remote controller 40.

Next, the arrangement of the DVD apparatus unit 21 will be described. The DVD apparatus unit 21 is composed of an encoder/formatter 23 to which the base band signals from the demodulation unit 11 is supplied, a data processor 24, a disk drive unit 25, a decoder 26 and a buffer memory 27. The encoder/formatter 23 converts the base band signals supplied from the demodulation unit 11 to digital signals, subjects the signals to compression process based on MPEG (moving picture experts group) standard, converts the signals using the buffer memory 27 to a format corresponding to the specific DVD standard, and transmits the signals to the data processor 24. The data processor 24 including a buffer circuit, a modulation/demodulation circuit, an error correcting circuit and the like handles unit data to be recorded on or reproduced from the DVD disk 22, and subjects the data supplied from the encoder/formatter 23 to processes such as buffering, modulation/demodulation and error correction, before outputting the same to the disk drive unit 25. The disk drive unit 25 rotates the DVD disk 22, records the supplied data to the DVD disk 22, and reproduces the data. The data reproduced from the disk 22 is transmitted via the data processor 24 to the decoder 26. The decoder 26 subjects the reproduced data to a decoding process based on MPEG standard to convert the same into decompressed digital signals, and further converts the digital signals into analog signals to supply the same as base band signals to the selector unit 12.

Next, the arrangement of the VCR apparatus unit 28 will be described. The VCR apparatus unit 28 is composed of a recording signal processing unit 30 to which the base band signals from the demodulation unit 11 is supplied, a tape head drive unit 31 for recording and reproducing data on the loaded video cassette 29, and a reproducing signal processing unit 32. The recording signal processing unit 30 performs processes such as frequency modulation of luminance signals, carrier low-frequency band conversion of color signals, horizontal interleave processing, and converts the base band signals from the demodulation unit 11 into recording signals for recording data. Moreover, the tape head drive unit 31 comprises a tape drive system for driving the tape of the loaded video cassette 29 and a head drive system for rotating the rotating head, and executes the process of recording the recording signals supplied from the recording signal processing unit 30 to the tape of the video cassette 29 and reproducing the data on the tape. The reproduced reprocessing signals are converted into the original base band signals via the reproducing signal processing unit 32, and supplied to the selector unit 12.

According to the composite electronic device 1 arranged as described above, when the user wishes to record a television broadcast program to the DVD apparatus unit 21 or the VCR apparatus unit 28, the user operates the remote controller 40, by which the input unit 15 receives instruction signals from the remote controller 40, and the control unit 16 controls the channel selection of the broadcast program and also controls the demodulation unit 11 to convert the selected broadcast signals to base band video signals and audio signals. Moreover, the control unit 16 controls various units of the DVD apparatus unit 21 and the VCR apparatus unit 28. Thereby, the video and audio base band signals of the broadcast program viewed by the user can be recordably converted and recorded on the DVD disk 22 and the video cassette 29. Further, if the user operates the remote controller 40 to perform timer recording, the user presses the mode switch key 44 illustrated in FIG. 2 to select whether to perform recording to the DVD apparatus unit 21 or the VCR apparatus unit 28, inputs data such as the channel, the broadcast start time, the broadcast end time and the like of the broadcast program that the user wishes to record, and has the data stored in the memory unit 17. Furthermore, the composite electronic device 1 can have the received signals of the television broadcast program received through the tuner unit 10 output via the demodulation unit 11, the selector unit 12 and the OSD superimpose unit 13 to the video signal output unit 14, so as to display the television broadcast program directly on the display unit 61 for the user to view.

Furthermore, if the user wishes to reproduce the television broadcast program recorded in the DVD apparatus unit 21 or the VCR apparatus unit 28, the user operates the remote controller 40, by which the input unit 15 receives the instruction signal from the remote controller 40, the control unit 16 controls the various units of the DVD apparatus unit 21 and the VCR apparatus unit 28, the selector unit 12 and the OSD superimpose unit 13 to select the reproduction signals reproduced from the DVD disk 22 or the video cassette 29 by the selector 12, and the reproduction signals are supplied directly to the video signal output unit 14, or in another example, the video signals having information such as guidance display related to modes such as the DVD mode or VCR mode, the mode selection menu or the operation menu displayed based on the operation of the remote controller 40 superimposed on the reproduction signals selected by the selector unit 12 are processed in the video signal output unit 14 so that they can be displayed on the display unit 61, and displayed on the separately disposed display unit 61.

The present composite electronic device 1 has initially set up thereto functions and operation statuses of the units such as the tuner unit 10, the demodulation unit 11, the selector unit 12, the superimpose unit 13, the video signal output unit 14, the control unit 16 used for receiving the television broadcast program and outputting the video signals, the DVD apparatus unit 21 and the VCR apparatus unit 28, but the device is equipped with an initial setting changing function enabling the user to desirably change the settings, wherein when the instruction signals output by operating the select key 46 or the like on the remote controller 40 is transmitted via the input unit 15 to the control unit 16, the control unit 16 generates a GUI format menu information and supplies the same to the OSD superimpose unit 13, by which a menu screen interposed on the video screen on the display unit 61 is displayed through the video signal output unit 14. Thereby, the user can view the displayed menu screen and operate the select key 46 of the remote controller 40 or press the cancel key 47 or enter key 48 to desirably change the settings of each menu item displayed on the menu screen.

Now, the operation processes of the preset invention will be described with reference to FIG. 4. When the user presses the "operation key" in step S1, the procedure advances to step S2 where it is determined whether the "operation key" being pressed is a "multipurpose key" or not, and if it is not a "multipurpose key", the procedure advances to step S4 where a control is performed based on the pressed "operation key". If in step S2 the pressed "operation key" is a "multipurpose key", then the procedure advances to step S3 where it is determined whether the pressed "multipurpose key" is effective in multiple modes, and further in step S5, it is determined whether the key is an effective key in the current mode, wherein if the key is not an effective key in the current mode, the procedure advances to step S7 described later according to which an OSD apparatus selection screen is displayed. If it is determined in step S5 that the key is an effective key in the current mode, the procedure advances to step S6 where a control is performed according to the pressed "operation key".

If it is determined in step S3 that the pressed "multipurpose key" is an effective key in multiple modes, an OSD apparatus selection screen is displayed in step S7 to encourage the user to select an apparatus unit, then in step S8, whether the user has selected an apparatus unit or not is determined. If the user had not selected an apparatus unit in step S8, the procedure advances to step S12 where the display of the OSD apparatus selection screen is erased. Furthermore, if the user had selected an apparatus unit in step S8, then in step S9, the display of the OSD apparatus selection screen is erased, and in step S10, the mode is changed to the apparatus unit selected by the user, and thereafter, the control is performed according to the operation key pressed by the user.

Now, in order to further clarify the effects of the present invention, a matrix chart showing in comparison the operation of the prior art device having a DVD apparatus unit and a VCR apparatus unit and the operation of the composite electronic device of the present invention is referred to for description.

FIG. 5 shows cases in which only the DVD apparatus is reproducing, only the VCR apparatus is reproducing, and both the DVD apparatus and VCR apparatus are reproducing. Further, if the DVD apparatus and the VCR apparatus are equipped with a recording function, the same conditions apply for recording. A combination of recording and reproducing operations is also possible, such as when one unit is recording while the other is reproducing. It is also possible that the units are fast forwarding or fast rewinding instead of reproducing or recording, such as when the VCR apparatus is fast rewinding and the DVD apparatus is reproducing. In other words, FIG. 5 is a comparison matrix chart showing the operation of the prior art device and the operation of the present composite electronic device when a "stop button" is pressed to the stop reproducing operation of the DVD apparatus and stop reproducing operation of the VCR apparatus when the devices are in statuses according to the "status of apparatuses" on the left column.

FIG. 6 is a matrix chart showing the transition from stop operation to reproducing operation, including cases in which a medium (a disk and a cassette tape) is loaded in the DVD apparatus and the VCR apparatus (denoted as "with D" and "with T") and in which a medium is not loaded in the apparatuses (denoted as "w/o D" and "w/o T). Of course, if the DVD apparatus and the VCR apparatus have recording functions, the same conditions apply for recording. A "play key" is to be pressed in order to reproduce the disk or tape, and a "record key" is to be pressed in order to record on the disk or tape. In other words, FIG. 6 is a comparison matrix showing the operation of the prior art device and the operation of the present composite electronic device when a key is pressed to perform reproducing operation in the DVD apparatus and to perform reproducing operation in the VCR apparatus when the devices are in statuses according to the "status of apparatuses" shown in the left column.

Now, the actual example of the screen display asking which mode is to be selected according to the preferred embodiment of the present invention will be described.

FIG. 7 shows an example in which a "play key" is pressed, wherein (a) shows the state in which the "play key" is pressed and the user is enabled to select the DVD apparatus or the VCR apparatus by pressing left and right cursor keys, and when the user selects the VCR apparatus by pressing the left cursor key, as shown in (b), the display of the VCR apparatus is selected, the other displays are erased, the mode is switched to the VCR mode, and the VCR is reproduced.

FIG. 8 shows a display example in which the user is asked to confirm if it is okay or not after pressing the "play key", and the display is performed based on the current mode. FIG. 8 shows an example in which the DVD mode is selected, so the display of FIG. 8(a) is set to show the message "Reproduce DVD?", but if the VCR mode is selected, the display is arranged to show the message "Reproduce VCR?" If the user presses the right cursor key and selects "No (reproduce VCR)" in FIG. 8(a), the screen of FIG. 8(b) will be displayed with the other displays erased, the mode is switched to the VCR mode, and the VCR is reproduced.

According to the example of screen display of FIGS. 7 and 8, a system is adopted to select the apparatus unit modes through left and right cursor keys, but as shown in FIG. 9, it is also possible to select apparatus unit modes by pressing up and down cursor keys. By pressing the cancel key, the above operation can be cancelled.

In the above description, an integrated apparatus including a DVD reproduction apparatus unit and a VCR apparatus unit has been described as an example of the composite device, but equivalent effects can be exerted by the following combinations of apparatus units. Furthermore, the present invention can similarly be applied to recording and reproducing apparatuses of new media that may appear in the future.
(1) An integrated device having a DVD recorder (recording/reproducing apparatus) and VCR;
(2) An integrated device having a DVD recorder (recording/reproducing apparatus) and HDD recorder (recording/reproducing apparatus);
(3) An integrated device having a DVD recorder (recording/reproducing apparatus), VCR and HDD recorder (recording/reproducing apparatus);
(4) An integrated device having a DVD recorder (recording/reproducing apparatus), VCR, HDD recorder (recording/reproducing apparatus) and memory card.

The example of the device described in (4) is illustrated in FIG. 9(a), and if the composite device includes up to four apparatus units, the up, down, left and right cursor keys can be used and the design of the remote controller does not have to be changed. Moreover, as shown in FIG. 9(b), it is possible to design the system so that if the video tape of the VCR or the disk of the DVD is not loaded, the mode of that particular apparatus unit cannot be selected.

The effects of the present invention are as follows.

According to the present invention, the device displays an operation guidance when the user operates the operation key, so that the user can operate the device without feeling uncertain. Especially, when the user operates a multipurpose key, the device displays a mode operation guidance of the apparatus unit being the object of operation. In other words, when the multipurpose key is pressed, the device asks the user to select a mode when switching of modes is possible.

Further according to the present invention, when the decoded code corresponds to the multipurpose key, the device performs control based on the operation of the operation key without having the user feel any inconvenience, and when the key is not an effective key in the current mode, the device displays for the user a mode operation guidance of the apparatus unit being the object of operation.

Further according to the present invention, when the operation key corresponding to the decoded code is not an effective key in the current mode, the device displays a screen for selecting the apparatus unit being the object of operation, and after switching the mode according to the selection of the apparatus unit, performs control according to the operation of the operation key, so that the user is guided to operate the device without fail.

According further to the present invention, the decoded mode of the remote controller can be stored, so that when the multipurpose key is operated, an operation guidance to select a respective mode being the object of operation can be displayed on the display unit and notified to the user.

According even further to the present invention, the user can be freed from the bothersome operation of confirming the current mode before operating the multipurpose key, so that the operability of the device is improved, and the device is prevented from performing an operation in a different mode that is not intended by the user.

According further to the present invention, the device asks the user to select the mode when the multipurpose key is operated, so that the device no longer requires a dedicated "mode switch key", and no longer requires indicators and the like to be provided on the body of the device for indicating the current mode.

## Claims

1. A composite electronic device with an operation object guidance function having integrally assembled thereto a plurality of apparatus units for respectively recording and reproducing data on a plurality of recording media, the composite electronic device comprising:
a mode switch unit for selecting an apparatus unit;
a plurality of operation keys including a multipurpose key used commonly for operating the plurality of apparatus units;
wherein when the multipurpose key is pressed, the device displays an operation guidance of the mode switch unit.

2. A composite electronic device with an operation object guidance function having integrally assembled thereto a plurality of apparatus units for respectively recording and reproducing data on a plurality of recording media, the composite electronic device comprising:
a plurality of operation keys including a multipurpose key used commonly for operating the plurality of apparatus units;
a transmission unit for transmitting an instruction signal for instructing a code corresponding to respective operation keys when the operation key is pressed;
an input unit for receiving the instruction signal;
wherein the composite electronic device decodes a selected mode based on the instruction signal received via the input unit, decodes based on the code of the instruction signal whether the instruction signal is provided via the operation key or the multifunction key, and if the operation is provided via the multipurpose key, displays a mode operation guidance of the apparatus unit being the object of operation.

3. The composite electronic device with an operation object guidance function according to claim 1 or claim 2, wherein when the multipurpose key is pressed, the device determines whether the key is effective in a plurality of modes, and if the key is effective only in a single mode and the key is effective in the current mode, the operation guidance of the mode switch unit is not displayed, but if the key is effective in a plurality of modes or if the key is effective only in a single mode which is difference from the current mode, the operation guidance of the mode switch unit is displayed.

4. The composite electronic device with an operation object guidance function according to any one of claims 1 through 3, wherein the operation guidance of the mode switch unit is a screen display for selecting the apparatus unit being the object of operation, and after the mode is switched based on the selection of the apparatus unit, the device performs control based on the operation of the operation key.

5. The composite electronic device with an operation object guidance function according to claim 1, wherein when the code being decoded based on the instruction signal corresponds to the multipurpose key, the device determines whether the key is effective in the current mode, and if the key is effective in the current mode, the device performs control based on the operation of the operation key, but if the key is not effective in the current mode, the device displays a mode operation guidance of the apparatus unit being the object of operation.

6. The composite electronic device with an operation object guidance function according to claim 5, wherein when the operation key corresponding to the code being decoded based on the instruction signal is not an effective key in the current mode, the device displays a screen for selecting the apparatus unit being the object of operation, and after switching the mode according to the selection of the apparatus unit, performs control based on the operation of the operation key.

7. A composite electronic device with an operation object guidance function having integrally assembled thereto a plurality of apparatus units for respectively recording and reproducing data on a plurality of recording media, the composite electronic device comprising:
a plurality of operation keys including a multipurpose key used commonly for operating the plurality of apparatus units;
an input unit for receiving an instruction signal from a remote controller capable of switching modes among a plurality of modes in which the apparatus unit being the object of operation is specified, for transmitting the instruction signal having a code corresponding to the plurality of operation keys and remote-controlling the composite electronic device;
wherein the composite electronic device decodes the mode being selected by the remote controller based on the instruction signal received through the input unit, decodes based on the code which operation key had been operated to output the instruction signal, controls based on the decoded result the plurality of apparatus units and the overall composite electronic device, performs control so that the multipurpose key functions as the operation key for respective apparatus units in conjunction with the respective mode being selected, stores the decoded mode of the remote controller, and displays on the display unit the operation guidance for selecting respective modes being the object of operation when the multifunction key is operated.
